(19) Europäisches Patentamt / European Patent Office / Office européen des brevets

(11) **EP 2 627 096 A1**

(12) **EUROPEAN PATENT APPLICATION**

(43) Date of publication:
14.08.2013 Bulletin 2013/33

(51) Int Cl.:
*H04N 21/25* (2011.01)    *H04N 21/84* (2011.01)
*H04N 21/482* (2011.01)   *H04N 21/466* (2011.01)
*H04N 21/442* (2011.01)

(21) Application number: 12305141.9

(22) Date of filing: 09.02.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• Vigouroux, Jean-Ronan
35000 Rennes (FR)

• Orlac, Izabela
35160 Breteil (FR)
• Chevallier, Louis
35520 La Mézière (FR)

(74) Representative: Schmidt-Uhlig, Thomas
Deutsche Thomson OHG
European Patent Operations
Karl-Wiechert-Allee 74
30625 Hannover (DE)

(54) **Recommendation method using similarity metrics**

(57)    A method for recommending items of a set of items is proposed. The method comprises selecting one item of a set of proposed items, then to determine similarities between the metadata of the selected items and other items, respectively according to a first and a second approach. Then weighted similarities are determined based on the results of the first and the second approach, and the identifiers of the most recommended items are displayed, the most recommended items being considered the most similar items to the selected item according to the weighted approach. In addition, a command allows the user to control this weighting.

Fig. 5

**Description**

Technical field

The invention relates to the field of recommending systems and content discovery.

Background

A known approach for recommending an item belonging to a set of items is to use similarity metrics. For example, considering a set of videos, if a user selects a video which genre is "horror", then this user will be proposed other videos of this set of videos with the genre "horror", the most likely video to be proposed to the user being the most similar one to the selected video. This approach based on similarities has the advantage to recommend items which are supposed to stick to the user's taste. Many different approaches exist using similarities, and every approach has its own advantages and drawbacks. By using one or the other of those approaches, the recommended items tend to be always the same, thus getting the user quickly bored. Some of these classic approaches can be found in *Item-Base Collaborative Filtering Recommendation Algorithms* by Sarwar et al., Proceedings of the 10th international conference on World Wide Web, 2001.

There is therefore a need for a new approach for recommending items which pushes a user to browse a catalog of items by recommending to him more diversified but still relevant items.

Summary of the invention

It is proposed a method for recommending at least one item belonging to a catalog of items, each item being characterized by an identifier and by metadata, the method comprising the steps of:

- Selecting one item;
- Determining first similarity values between the selected item and a plurality of other items of the catalog according to a first approach utilizing metadata of the items;
- Determining second similarity values between the selected item and the plurality of other items of the catalog according to a second approach utilizing metadata of the items;
- Determining weighted similarity values for the selected item based on a weighting between the first similarity values and the second similarity values;
- Determining recommended items being most similar to the selected item according to the weighted similarity values; and
- Displaying the identifiers of the recommended items

As a result, the user gets recommended or presented items which are not limited by one approach. Depending on the weighting, the user gets more different recommended items as it would have been the case by limiting the approach to only one approach.

Preferably the weighted similarity values of the displayed identifiers are displayed in an increasing order of similarity.

This way, the user sees directly and in an intuitive manner which items which are the most recommended to him.

Preferably, a command allows the user the direct control of the weighting.

This way, the user can play interactively with the command to increase the weighting of the first approach on the recommended items. This command can take the form of a cursor. In tuning the weighting, the user finds easily the weighting that better fits to his tastes. If the results are not good enough, then the user has just to adjust the weighting with the help of the command.

Preferably, a trust index is increased if a subsequent item selection consists in selecting one of the recommended items and is decreased if a subsequent item selection consists in selecting an item not comprised in the recommended items.

This way, the recommendations take into account the trust that the user puts into the recommending system. When the recommended items correspond to the user's expectations, then the trust of the user in the recommending system is increased. This increase of trust materializes itself by an increase in the introduced trust index.

Preferably, the dependence of the second similarity values to the weighting varies proportionally with the trust index.

This way, the more the user puts trust into the recommended items, the more the recommendations are based on the first (resp. second) approach than the second (resp. first) approach. Moreover, this way, the recommender senses the trust the user puts into it, without the need from the user to do anything in an explicit manner.

For a better understanding, the invention shall now be explained in more detail in the following description with reference to the figures. It is understood that the invention is not limited to the described embodiments and that specified features can also expediently be combined and/or modified without departing from the scope of the present invention as defined in the appended claims.

Brief Description of the drawings

Figure 1 shows a flowchart of the method according to the invention

Figure 2 shows the use of a cursor allowing a weighted recommendation between two recommending approaches

Figure 3 shows identifiers of recommended items displayed according to the utilized approach

Figure 4 shows how the trust index varies according to the user's selection

Figure 5 shows how the cursor varies with the trust index

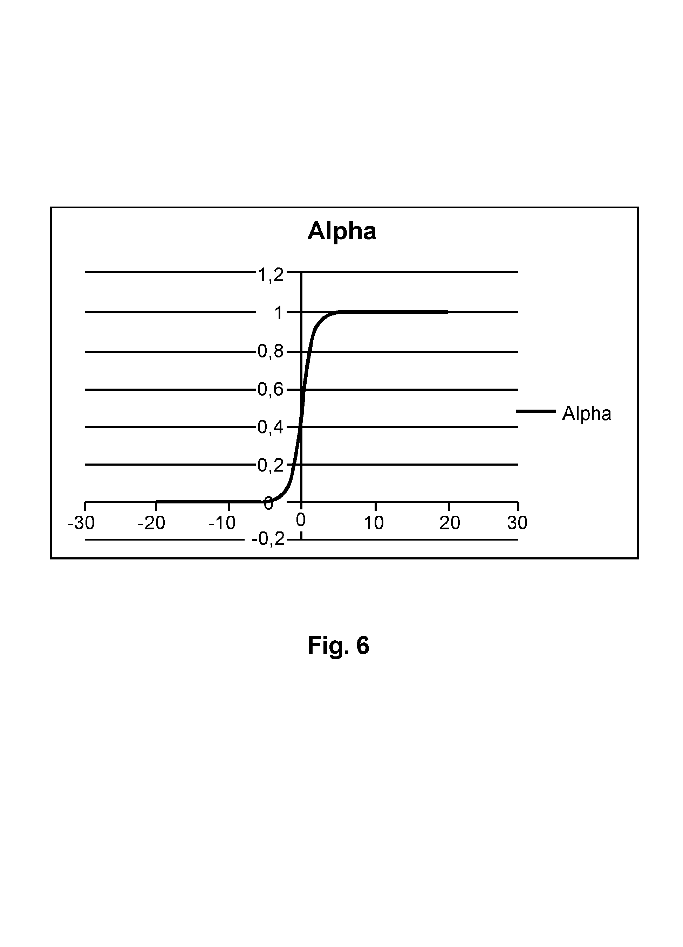

Figure 6 shows an example of a trust function

Detailed description of preferred embodiments

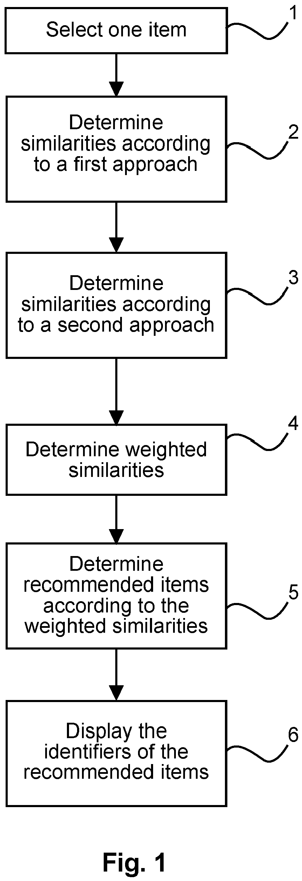

Figure 1 describes a method according to the invention. A set of items belonging to a catalog of items is presented to the user. The items are identified with identifiers displayed on a display. The items are for example documents which can be of interest for the user. For instance, the items may be audiovisual documents such as movies or songs, or may be electronic books, or any electronic documents. The display is connected to peripherals allowing the user to select at least an item. For example, the display may be a tactile display allowing the user to select with a finger the item he wants to select. The identifiers are elements allowing to identify the items. For example, an identifier of a movie may be the title of the movie, or an image extracted of a movie.

The items are also characterized by specific metadata. For example, a piece of metadata characterizing an item may be a rating given by users. It may be a popularity value, that is a value representative of how many people have bought the item for example. To enable the comparison of ratings given by users to an item, it may be necessary to have access to ratings given by users to all the other items. In this respect, the set of all the ratings of all the items in the library may be considered as belonging to the metadata of each item.

Once the user has selected an item, similarities between this first item and other items of the catalog are determined. Similarities between the first items and other items are for example similarities scores. A similarity score is for example a value comprised between 1 and 5, the value 1 corresponding to a low similarity between the selected item and another item, and the value 5 corresponding to a high similarity between the selected item and the other item. For example:

| Item selected IS | Item A | Item B | Item C |
|---|---|---|---|
| Similarity score according to first approach | 3,5 | 4 | 2 |
| Similarity score according to second approach | 4 | 2 | 5 |
| Weighted similarity score | 3,75 | 3 | 3,5 |

Weighted similarity values are then determined. For example, weighting may be determined thanks to a weighting factor denoted alpha. Let the similarity between the selected item IS and item A determined according to a first approach be denoted S1(item selected, item A), and let the similarity between the selected item and item A according to the second approach be denoted S2(item selected, item A).

According to this notation and regarding the above example:

S1(IS,C) < S1(IS,A) < S1(IS,B)
S2(IS,B) < S2(IS,A) < S2(IS,C)

Let the weighted similarity being denoted Salpha. Salpha may be determined as :

```
Salpha = alpha.S1 + (1- alpha).S2   [ Equation 1 ]
```

Alpha being a value comprised between 0 and 1

With these notations, and a value of alpha fixed to 0,5, the weighted similarity scores are determined as follows:

```
Salpha(IS,A) = 0,5 x S1(IS,A) + (1-0,5) x S2(IS,A)
```

```
Salpha(IS,B) = 0,5 x S1(IS,B) + (1-0,5) x S2(IS,B)
```

```
Salpha(IS,C) = 0,5 x S1(IS,C) + (1-0,5) x S2(IS,C)
```

The weighted similarity shown in Equation 1 is only an example. In a more general manner, Salpha is a monotonic function of alpha such that, when alpha = 0, Salpha corresponds to S1, that is the first approach; and when alpha = 1, Salpha represents S2, that is the second approach.

The value alpha may be entered by a user thanks to a dedicated user interface.

As a result, the most recommended item with the first approach is item B, the most recommended item with the second approach is item C, and the most recommended item with the weighted approach is item A.

The identifiers of the recommended items may then be displayed on a display.

The example shows also that, if the plurality of recommended items is comprised of two items, the first approach would display items A and B, whereas the second approach would display items A and C.

Whereas each recommendation approach has its own advantages and drawbacks, the weighted approach proposed by the invention takes the best of both first and second approaches.

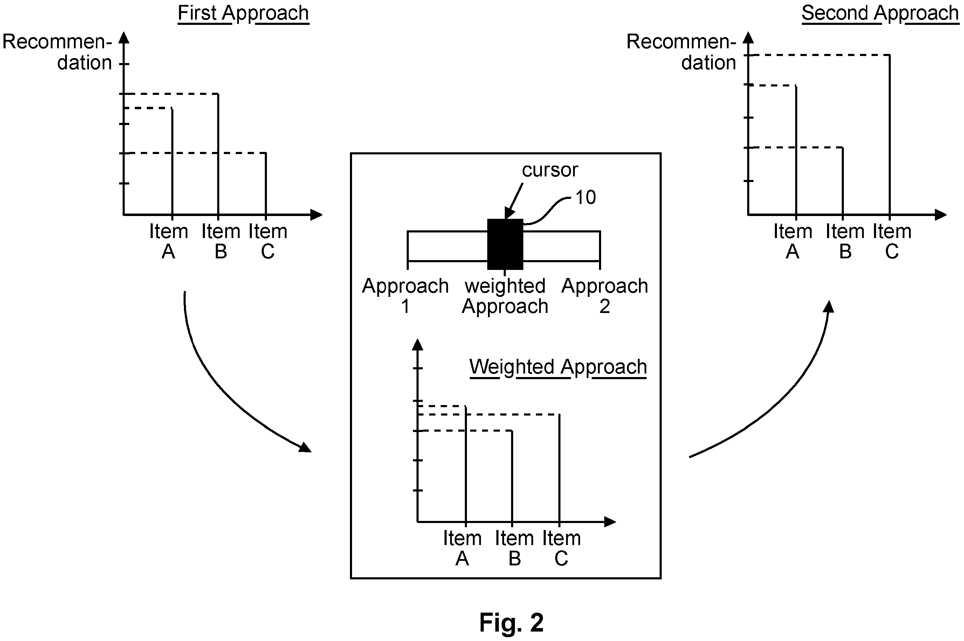

Preferably, the value alpha may be fixed by the user thanks to a command, for example a cursor as depicted in Figure 2. This way, the user has access in an interactive manner to a more diversified choice of recommended items by moving the cursor.

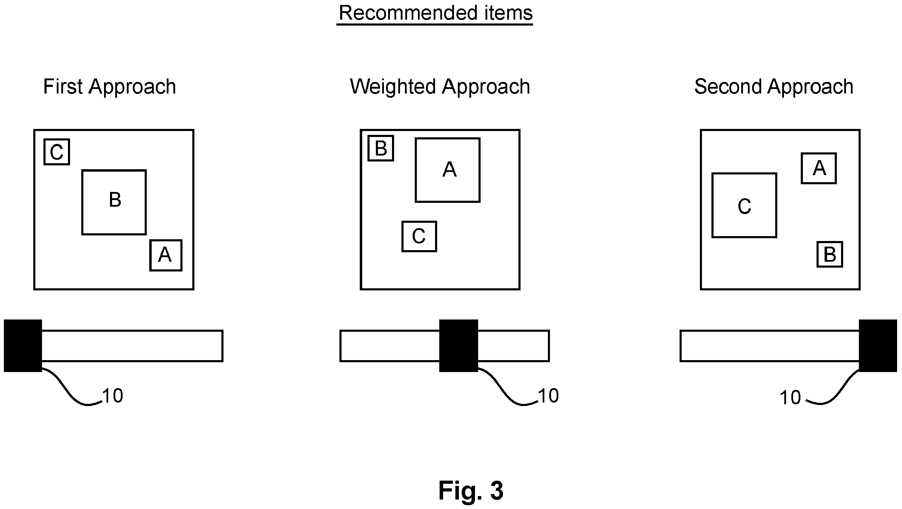

As depicted in Figure 3, the identifiers of the recommended items may also be displayed with a size proportional to the associated similarity values. Thus, the square A, identifier of the item A and which has the higher similarity score with the selected item, is displayed in a bigger size than the identifier of the item C, which itself is displayed in a bigger size than the square B.

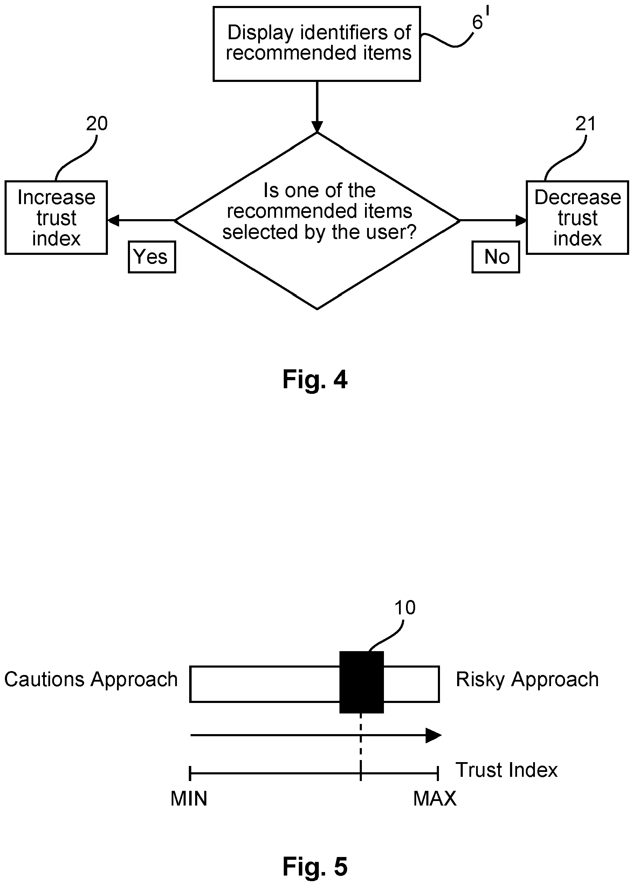

Figure 4 illustrates a trust index taking into account the trust that a user puts in the proposed recommendations. Items of the catalog of items are displayed. Among the displayed items, some items may be identified as recommended items, notably because they have great similarities with a previously selected item by the user. The user then has the choice to select either items which have been labeled as recommended items, or the user may choose to select one or more other items which are not labeled as such. When the user chooses to select a recommended item, it means implicitly that the recommending system has recommended items that are of interest to the user. Therefore, it is legitimate to say that the trust of the user into the recommending system has increased. In the other way, if the user chooses to neglect the items which are recommended to him by choosing other items, then it means implicitly that the recommending system has not recommended the items which are of interest for the user, and the trust the user has in the recommending system decreases.

To sum up, each time the user selects one of the recommended items, the trust index is increased, and each time the user selects an item which is not one of the recommended items, the trust index decreases.

Figure 5 depicts a cursor controllable by a user. When the cursor is moved towards the left of the axis, then a first approach, for example a cautious approach, is privileged. When the cursor is moved towards the right side of the axis, then the second approach, a more risky approach for example is privileged. The left to right displacement of the cursor is representative of the trust the user puts into the recommending system.

This cursor can be moved by the user as described before. It may also be moved automatically according to the method described in figure 4. Automatically here means that no explicit intervention to move the cursor is asked from the user.

Let P denote a trust index. According to what is described above, P increases when the user selects one of the recommended items, and decreases when the user selects an item which is not a recommended item. P may be represented by a function P = P0 + N, where P0 is an initial trust index (P0 = 0, for example) and N is a counter, which is increased by one unit every time the user selects a recommended item, and which is decreased by one unit every time the user selects an item, which was not recommended by the recommending system.

Alpha may then be expressed as a function of this trust value. For example:

$$\text{Alpha (P)} = [1+\tanh(P)]/2$$

Any monotonic increasing function, such that
$\lim_{-\infty}$ Alpha = 0 and $\lim_{+\infty}$ Alpha = 1 , is suitable, and allows the weighting alpha to vary proportionally with the trust index P. Likewise, the dependence of the second similarity values varies proportionally.

In determining similarities, many approaches exist. A problem lies in that similarities determined according to a first approach may sometimes lead to strange results for certain kind of metadata. For instance, if a metadata consists in the ratings given to items A and B, if the number of ratings given to the two items is very different, the determined similarities lead to strange results. The problem is known by the man skilled in the art and is solved by using the Jaccard factor. However, it is known that this second approach, using the Jaccard factor, leads to results promoting very popular items. Then items proposed to the user are very consensual. On the contrary, the absence of the Jaccard factor leads to much less consensual items.

The solution proposed by the invention allows then to balance the appropriateness of the recommended items according to the taste of the user, thanks to a weighting factor which mitigates the first and the second approach.

**Claims**

1. Method for recommending at least one item belonging to a catalog of items, each item being **characterized by** an identifier and by metadata, the method comprising the following steps:

   - Selecting one item (1);
   - Determining first similarity values between the selected item and a plurality of other items of the catalog according to a first approach utilizing metadata of the items (2);
   - Determining second similarity values between the selected item and the plurality of other items of the catalog according to a second approach utilizing metadata of the items (3);
   - Determining weighted similarity values for the selected item based on a weighting between the first similarity values and the second similarity values (4);
   - Determining recommended items being most similar to the selected item according to the weighted similarity values (5); and
   - Displaying the identifiers of the recommended items (6)

2. The method of claim 1 **characterized in that** the weighted similarity values of the displayed identifiers are displayed in an increasing order of similarity

3. The method of claim 1 or 2 **characterized in that** the size of the displayed identifiers of the recommended items is proportional to the associated weighted similarity value

4. The method of claim 1 or 2 or 3 **characterized in that** a trust index is increased (20) if a subsequent item selection consists in selecting one of the recommended items and is decreased (21)if a subsequent item selection consists in selecting an item not comprised in the recommended items

5. The method of claim 4 **characterized in that** the dependence of the second similarity values to the weighting varies proportionally with the trust index

6. The method according to any of the previous claims, **characterized in that** a command allows the direct control of the weighting

```
┌─────────────────────────┐
│     Select one item     │──────╮ 1
└─────────────────────────┘      ╰
            │
            ▼
┌─────────────────────────┐
│       Determine         │
│ similarities according  │──────╮ 2
│    to a first approach  │      ╰
└─────────────────────────┘
            │
            ▼
┌─────────────────────────┐
│       Determine         │
│ similarities according  │──────╮ 3
│  to a second approach   │      ╰
└─────────────────────────┘
            │
            ▼
┌─────────────────────────┐
│   Determine weighted    │──────╮ 4
│      similarities       │      ╰
└─────────────────────────┘
            │
            ▼
┌─────────────────────────┐
│       Determine         │
│  recommended items      │──────╮ 5
│   according to the      │      ╰
│  weighted similarities  │
└─────────────────────────┘
            │
            ▼
┌─────────────────────────┐
│      Display the        │
│   identifiers of the    │──────╮ 6
│  recommended items      │      ╰
└─────────────────────────┘
```

## Fig. 1

Fig. 2

## Recommended items

First Approach

Weighted Approach

Second Approach

Fig. 3

EP 2 627 096 A1

Display identifiers of
recommended items                    6'

Increase
trust
index          20

Is one of the
recommended items
selected by the user?          21

Yes

Decrease
trust
index

No

**Fig. 4**

Cautions Approach          10

Risky Approach

Trust Index

MIN                    MAX

**Fig. 5**

**Fig. 6**

Europäisches
Patentamt

European
Patent Office

Office européen
des brevets

# EUROPEAN SEARCH REPORT

Application Number

EP 12 30 5141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/076780 A1 (ORCA INTERACTIVE LTD [IL]; WEINTRAUB OFER [IL]; AGMON ERAN [IL]; ESHKO) 8 July 2010 (2010-07-08) | 1 | INV. H04N21/25 H04N21/84 H04N21/482 H04N21/466 H04N21/442 |
| Y | * abstract * * paragraphs [0003] - [0004], [0009] - [0011], [0017] - [0018], [0020] - [0022], [0025] - [0027] * * claims 1,5-10,13-14,16-17 * * figures 1-4 * | 2-6 | |
| X | US 2003/229896 A1 (BUCZAK ANNA L [US]) 11 December 2003 (2003-12-11) * the whole document * | 1 | |
| Y | US 2009/077220 A1 (SVENDSEN HUGH [US] ET AL) 19 March 2009 (2009-03-19) * figures 1,4-18 * * paragraphs [0007], [0008], [0037], [0040], [0047], [0052] - [0059], [0061], [0064], [0067], [0069] - [0076], [0078] - [0079], [0082] - [0087] * | 2,6 | TECHNICAL FIELDS SEARCHED (IPC) H04N G06F G06Q |
| Y | EP 1 762 947 A2 (SONY CORP [JP]) 14 March 2007 (2007-03-14) * paragraphs [0011], [0158] * * figures 2,22 * | 3 | |
| Y | EP 1 337 110 A1 (CIT ALCATEL [FR]) 20 August 2003 (2003-08-20) * abstract * * paragraphs [0005], [0006], [0008], [0011] - [0025], [0031], [0040] - [0042], [0046] - [0048], [0050], [0056] - [0061] * * claims 1-4,6-7,9 * * figures 3,4 * | 4,5 | |

-/--

The present search report has been drawn up for all claims

| Place of search | Date of completion of the search | Examiner |
|---|---|---|
| The Hague | 17 July 2012 | Beaudet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 12 30 5141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 02/11440 A2 (KONINKL PHILIPS ELECTRONICS NV [NL]) 7 February 2002 (2002-02-07) * the whole document * | 1-6 | |
| A | KR 2002 0060856 A (CORETRUST INC [KR]) 19 July 2002 (2002-07-19) * abstract * | 1-6 | |
| A | US 2008/301118 A1 (CHIEN SHU-YAO [US] ET AL) 4 December 2008 (2008-12-04) * abstract * * figures 1,3-6,8 * * paragraphs [0005] - [0009], [0023], [0026] - [0030], [0032] - [0037], [0040] - [0041], [0044] * * claims 1-6,9-11,14,16,19-23,26,28,30 * | 1-6 | |
| A | US 2009/293019 A1 (RAFFEL KEITH [US] ET AL) 26 November 2009 (2009-11-26) * abstract * * figures 1-3,5 * * paragraphs [0002], [0007], [0008], [0021], [0022], [0024] - [0027], [0032], [0033], [0037] - [0038] * * claims 1,3-5,7-12 * | 6 | TECHNICAL FIELDS SEARCHED (IPC) |

The present search report has been drawn up for all claims

| Place of search | Date of completion of the search | Examiner |
|---|---|---|
| The Hague | 17 July 2012 | Beaudet, J |

**ANNEX TO THE EUROPEAN SEARCH REPORT
ON EUROPEAN PATENT APPLICATION NO.**

EP 12 30 5141

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2012

| Patent document cited in search report | | | Publication date | Patent family member(s) | | | Publication date |
|---|---|---|---|---|---|---|---|
| WO 2010076780 | A1 | | 08-07-2010 | EP<br>US<br>WO | 2382780<br>2012036523<br>2010076780 | A1<br>A1<br>A1 | 02-11-2011<br>09-02-2012<br>08-07-2010 |
| US 2003229896 | A1 | | 11-12-2003 | AU<br>CN<br>EP<br>JP<br>US<br>WO | 2003228055<br>1666227<br>1516285<br>2005529415<br>2003229896<br>03105082 | A1<br>A<br>A2<br>A<br>A1<br>A2 | 22-12-2003<br>07-09-2005<br>23-03-2005<br>29-09-2005<br>11-12-2003<br>18-12-2003 |
| US 2009077220 | A1 | | 19-03-2009 | US<br>US | 2009077220<br>2012072852 | A1<br>A1 | 19-03-2009<br>22-03-2012 |
| EP 1762947 | A2 | | 14-03-2007 | CN<br>EP<br>JP<br>JP<br>KR<br>US | 1933586<br>1762947<br>4779481<br>2007028310<br>20070011159<br>2007033007 | A<br>A2<br>B2<br>A<br>A<br>A1 | 21-03-2007<br>14-03-2007<br>28-09-2011<br>01-02-2007<br>24-01-2007<br>08-02-2007 |
| EP 1337110 | A1 | | 20-08-2003 | EP<br>FR<br>US | 1337110<br>2836321<br>2003159148 | A1<br>A1<br>A1 | 20-08-2003<br>22-08-2003<br>21-08-2003 |
| WO 0211440 | A2 | | 07-02-2002 | EP<br>JP<br>US<br>WO | 1308044<br>2004505561<br>7454775<br>0211440 | A2<br>A<br>B1<br>A2 | 07-05-2003<br>19-02-2004<br>18-11-2008<br>07-02-2002 |
| KR 20020060856 | A | | 19-07-2002 | NONE | | | |
| US 2008301118 | A1 | | 04-12-2008 | NONE | | | |
| US 2009293019 | A1 | | 26-11-2009 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SARWAR et al.** *Proceedings of the 10th international conference on World Wide Web,* 2001